# EUROPEAN PATENT SPECIFICATION

(11) **EP 1 493 248 B1**
(45) Date of publication and mention of the grant of the patent: **04.05.2011**
(21) Application number: 03721363.4
(22) Date of filing: 12.03.2003
(51) Int. Cl.: H04W 28/06

(54) **OPTIMIZATION OF TRANSMISSION PARAMETERS OF A WIRELESS INTERFACE BASED ON CODEC TYPE**
OPTIMIERUNG VON UEBERTRAGUNGSPARAMETERN EINER DRAHTLOSEN SCHNITTSTELLE BASIEREND AUF DER ART DES CODEC
OPTIMISATION DES PARAMETRES DE TRANSMISSION D'UNE INTERFACE SANS FIL SUR LA BASE DU TYPE DE CODEC

(30) Priority: 08.04.2002 US 118096
(43) Date of publication of application: 05.01.2005
(73) Proprietor: Motorola Mobility, Inc., Libertyville, IL 60048 (US)
(72) Inventor: SPEAR, Stephen, Skokie, IL 60203 (US); GUPTA, Sanjay, Lakewood, IL 60014 (US)
(74) Representative: Openshaw, Paul Malcolm
(86) International application number: PCT/US2003/007651
(87) International publication number: WO 2003/088588

(56) References cited:
- WO-A-02/15627
- WO-A-99/16266
- US-B1- 6 262 994
- 3GPP TSG SERVICES AND SYSTEM ASPECTS: "QoS Concept and architecture (Release 5)" 3GPP TS 23.107 V5.3.0, XX, XX, January 2002 (2002-01), pages 1-39, XP002241582
- "Technical Specification Group Core Network;General Packet Radio Service (GPRS); Mobile Station (MS)-Serving GPRS Support Node (SGSN); Subnetwork Dependent Convergence Protocol (SNDCP)" 3G TS 24.065 V3.1.0, XX, XX, 1 August 1999 (1999-08-01), XP002184769

## Description

### TECHNICAL FIELD

The present invention relates generally to wireless communication systems and, in particular, to the optimization of a wireless interface within such communication systems based on communication type.

### BACKGROUND OF THE INVENTION

Wireless communication systems are well known in the art. In traditional wireless communication systems, real time services are typically implemented using a circuit switched infrastructure in conjunction with at least one dedicated wireless resource. A current trend in the industry, however, is the use of so-called packet switched infrastructures in support of wireless communication systems. In particular, the use of the Internet Protocol (IP) is likely to become an industry standard.

While it is expected that packet switched technology will be able to support real time services such as voice and/or video communications, a fundamental design constraint on any such system will be the efficiency of the wireless (or air) interface. To this end, it has long been understood that the additional switching overhead used in packet switched technology can not be transmitted via a wireless interface. To improve efficiency, headers may be either eliminated altogether or compressed when data presented in a packet switched format is to be transmitted over the air. Furthermore, it is well known in the art that different types of source encoders result in encoded information having varying levels of error resistance. As a result, certain portions of an encoder's output may be error protected less rigorously than other portions, thereby providing an opportunity to improve the overall efficiency of the wireless interface.

In current communication systems, wireless subscriber or communication units typically communicate with a wireless or radio access network (RAN) which in turn communicates with a packet switched network forming a part of the infrastructure. Often, the target of the communication unit is a client coupled to the packet network typically through an intermediate packet switched network such as the Internet or World Wide Web. In order to take advantage of the above described opportunities to optimize the wireless interface, the radio access network needs to have knowledge of the particular type of data being transmitted and received for a given communication. In this manner, the radio access network will know how to best optimize the wireless interface with the wireless communication units. However, in current systems, the radio access network has no such knowledge as it is unchangeably "hard-coded" into the operation of the radio access network. In order to maintain maximum flexibility and still obtain the advantages of an optimized air interface, it would be advantageous to provide a technique for informing the radio access network of communication types for separate wireless communications between communication units and the infrastructure.

WO/0215627 A1 discloses a method and a communication system comprising first network element, e.g. portable terminal, connectable to a second network element. One of selectable modes is used for communication. A network element is adapted to perform a mode selection procedure for selecting the same mode for bidirectional communication between the network elements.

WO/9916266 A2 discloses an arrangement in which applications running on a mobile station or an external network entity such as an Internet service provider may specify on an individual application flow basis a requested quality of service.

According to the present invention a method, computer readable medium and apparatus are provided as defined in the claims.

### BRIEF DESCRIPTION OF THE DRAWINGS

FIG. 1 is a block diagram of a wireless communication system in accordance with the present invention.
FIG. 2 is a flowchart illustrating operation of a wireless communication system in accordance with an embodiment of the present invention.
FIG. 3 is a block diagram of a wireless communication system based on the so-called Universal Mobile Telecommunication System and in accordance with the present invention.
FIGs. 4-6 are illustrations of protocol stacks and frame formats in accordance with the prior art.
FIG. 7 is an illustration of an exemplary protocol stack in accordance with the present invention.
FIG. 8 is an illustration of an exemplary frame format in accordance with the present invention.

### DETAILED DESCRIPTION OF THE INVENTION

The present invention provides a technique for informing a radio access network as to the type of communication between a communication unit and a network-based client. Based on this information, the radio access network can optimize the wireless interface between the radio access network and the communication unit. To this end, either end point of a communication may inform the radio access network of the communication type. In a presently preferred embodiment, the informing end point may comprise the communication unit itself or the client. Alternatively, the informing end point may comprise a proxy acting on behalf of the communication unit or a call server acting on behalf of the client. Additionally, the communication type may be embodied by information regarding a source encoder to be used during the communication. Preferably, optimization of the wireless interface may be implemented through the selection of an optimal error correction scheme or through the compression and decompression of headers associated with a plurality of packet switched portions constituting the communication. A network element disposed within the radio access network is used to optimize the wireless interface based on the communication type.

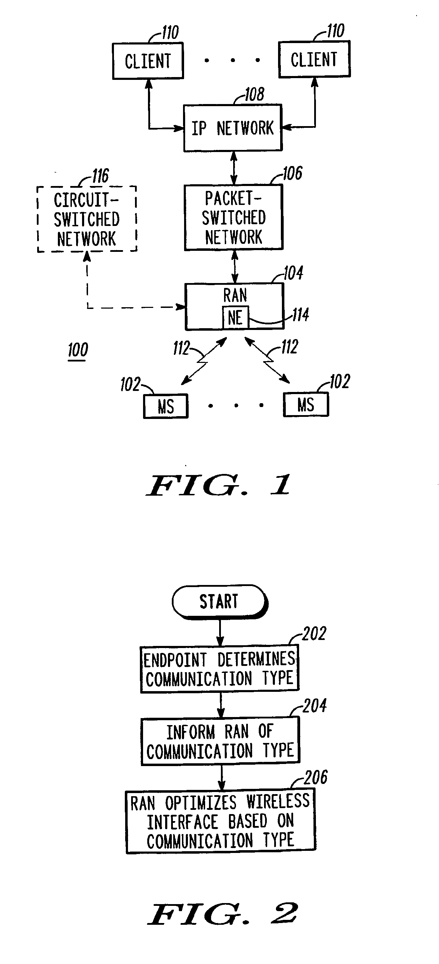

The present invention may be more readily described with reference to FIGS. 1-8 below. Referring now to FIG. 1, a wireless communication system 100 is illustrated. In particular, the wireless communication system 100 comprises a plurality of mobile subscriber or communication units 102 in wireless communication with a radio access network 104. The radio access network 104, in turn, is coupled to a packet switched network 106, that is itself coupled to an Internet Protocol (IP) based network 108. A plurality of clients 110 are coupled to the IP network 108. The radio access network 104 may be optionally coupled to a circuit switched network 116 as shown.

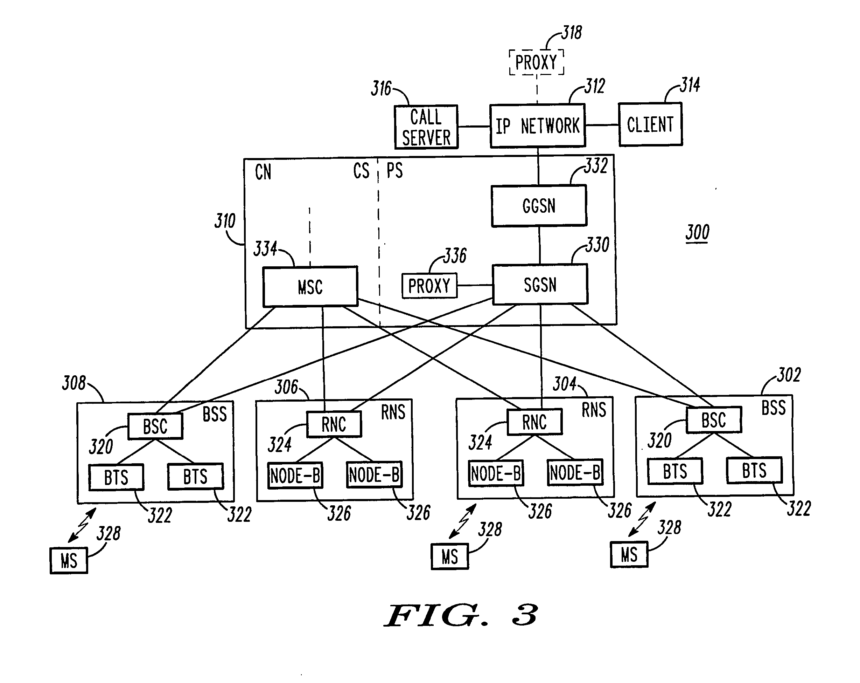

The communication units 102 preferably comprise mobile or portable devices (such as in-car or handheld radios or radio telephones) capable of communicating with the radio access network 104 via one or more wireless channels 112. Preferably, the wireless channels 112 comprise one or more radio frequency (RF) channels implementing any of a variety of known protocols and access schemes, such as code division multiple access (CDMA), frequency division multiple access (FDMA) or time division multiple access (TDMA). As described in greater detail with reference to FIG. 3, the radio access network 104 comprises those elements of an infrastructure that manage wireless communications with the communication units. As schematically shown in FIG. 1, the radio access network 104 comprises one or more network elements 114 that contribute to the operation of the radio access network. Relative to the communication units 102, the radio access network 104 implements a wireless interface via the wireless channels 112 by which the communication units 102 are able to communicate with the radio access network 104, as well as the various packet switched and IP networks illustrated in FIG. 1.

Although the packet switched network 106 is described in further detail with reference to FIG. 3 below, it is characterized by the use of headers to effectuate the routing of data throughout the packet network. As known in the art, such packet switched networks provide efficient use of available resources relative to traditional circuit switch networks because resources are not committed to particular communications for the duration of those communications. Likewise, the IP network 108 is a packet switched based network of a type commonly used in the Internet and World Wide Web. As such, the clients 110 may comprise computer devices capable of terminating the IP protocol, as known in the art.

When a communication unit 102 engages in a communication with a client 110, either the communication unit or client may be considered an end point to the communication. In traditional first and second generation communication systems, encoder/decoder (codec) devices were typically hard coded within the end points of the communication. For example, in many land mobile radio communication systems voice compression codecs are used to maximize the spectral efficiency of voice data transmitted via a wireless interface. In these systems, because a single voice codec is provided, the wireless interface between the communication units and the radio access network is optimized strictly for that single source codec type. However, with the advent of real time services, such as voice over IP (VoIP), any one of a variety of source encoders may be used for a given communication. As such, the wireless interface provided by the radio access network may not be optimized for the source encoder chosen for a particular communication.

To this end, the present invention provides a technique for informing the radio access network of a communication type for a given communication such that the radio access network can subsequently optimize the wireless interface. Referring now to FIG. 2, a flowchart illustrating a process in accordance with the present invention is illustrated. Preferably, the process illustrated in FIG. 2 is implemented using stored computer executable instructions that are executed by a suitable processor within an appropriate platform or platforms. Such implementation techniques are well known in the art. Thus, at block 202, an endpoint to a communication determines a communication type for the communication. Generally, the communication type may comprise any information sufficient to allow a network element to determine how to optimize the wireless interface. In a presently preferred embodiment, the communication type is indicated by a type of source encoder to be used during the communication. Typically, the type of source encoder to be used during the communication is determined by the type of service and is requested explicitly (or implicitly) during call setup. For example, for a voice-only communication with a particular class of communication units, a certain voice encoder, e.g., a GSM full rate codec in GSM networks, may be used. Conversely, where the communication comprises only video data, a suitable video encoder, e.g., H.263 or MPEG 2.0 codecs, may be used. It is possible that a combination of multiple encoders may be used as in the case of a communication comprising voice and video data. It is even possible to change the chosen source coder during a call. Regardless, the present invention is capable of handling each of these scenarios. It should be noted that the end points may also comprise various entities acting on behalf of communication units or clients. As further described with reference to FIG. 3 below, devices such as a wireless proxy and call server may be used on behalf of the communication unit and/or the client.

Regardless, at block 204 the end point that has determined the communication type for the communication informs the radio access network of this communication type. This may be achieved through the use of either an explicit or implicit messaging scheme. In the case of an explicit messaging scheme, a new message is created, or existing messages are modified to include the information indicating the communication type to the radio access networks, e.g., through the addition of an additional protocol layer or augmentation of an existing protocol layer. Thus, for example, where the communication unit is the end point informing the radio access network of the communication type, a new message may be created within a protocol used by the communication unit to communicate with the radio access network, which message comprises the information regarding the communication type. It should be noted that, in some situations, the communication unit is essentially acting as a wireless modem for a device attached to the communication unit, which device is the actual end point for the communication. In this case, the communication unit is informed of the communication type by the attached device as needed. Alternatively, where the client, or a call server acting on behalf of the client, acts as the end point which informs the radio access network of the communication type, an explicit message defined within the appropriate protocol between the client (or call server) and the radio access network (or agent on its behalf) may be added. As described in greater detail below relative to FIG. 3, the packet switched network 106 may comprise a wireless agent acting on behalf of the radio access network 104, which agent is designated to receive such explicit messages from the client or call server and to subsequently inform the radio access network of the communication type.

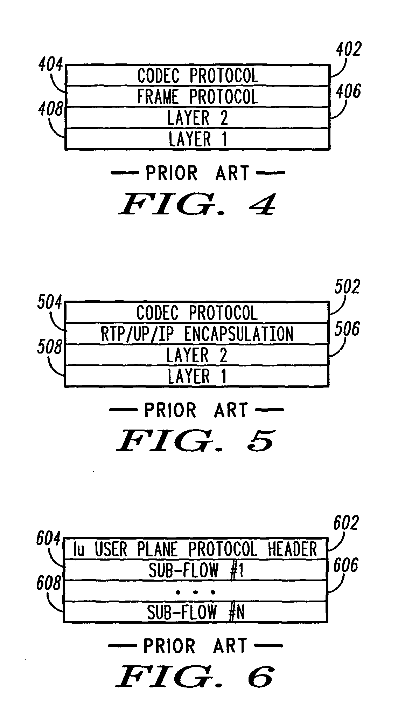

In an alternate embodiment, rather than an explicit message being sent by the end point to the radio access network, such an indication is implicitly included in information sent to the radio access network via the end point. A particular example of this alternative is described below relative to FIGs. 4-8. In general, such implicit methods are characterized by the presence of sufficient information within each packet of data to indicate the appropriate techniques to be used in order to optimize the wireless interface.

Once the radio access network has been informed of the communication type, it can, at block 206, optimize the wireless interface between the radio access network and the particular communication unit involved in that communication based on the communication type information. In a presently preferred embodiment, such optimization is achieved through either or both of two schemes. In the first, an optimal error correction scheme is chosen for the wireless interface based on the communication type. As known in the art, the data output by certain source encoders has varying degrees of susceptibility to errors induced during the transmission of the data. For example, it is well known that certain voice codecs provide output parameters that are relatively insensitive to channel errors while other parameters are highly sensitive to channel errors. In order to maximize spectral efficiency when transmitting these parameters over a wireless interface, it is therefore known to provide a greater degree of error protection for those bits having a greater degree of sensitivity to channel errors, whereas those parameters having relatively insignificant susceptibility to channel errors are protected to a lesser degree or left unprotected altogether. Because this type of selective error encoding depends on the source encoder being used, the present invention allows the radio access network to select an optimized error encoding scheme based on its knowledge of the communication type. Such knowledge may be predetermined, in which case the radio access network knows to apply a predetermined error correction scheme based on the communication type that is provided to it by one of the end points. In a more generalized scheme, however, the radio access network may have knowledge only of varying levels of error protection that it is free to apply to data as needed. The appropriate level of error protection is therefore based only of knowledge of the different quantities of parameters within a given packet that will be provided to it within each class of error sensitivity. Specific examples of the concepts described above relative to FIG. 2 are further described with reference to FIGs. 3-8.

In the second optimization scheme, packet header compression/decompression is used. Such techniques are well known in the art, including Van Jocobsen's header compression. Alternatively, again using known techniques, headers may be discarded altogether on the sending side and reconstructed on the receiving side of a communication. The discarding and reconstruction of headers is further described in co-pending U.S. Patent Application Serial No. 09/887,831. Regardless, compression/decompression or elimination/reconstruction techniques minimize the amount of data to be sent via the wireless interface, thereby improving throughput and bandwidth usage efficiency.

Referring now to FIG. 3, a wireless communication system 300 based on a Universal Mobile Telecommunication System (UMTS) model is illustrated. The wireless communication system 300 comprises base station systems 302, 308, radio network subsystems 304, 306, and a core network 310. The core network 310 may be coupled to an IP network 312 and the IP network 312, in turn, may be coupled to one or more clients 314 and one or more call servers 316. A plurality of communication units 328 may communicate with the base station systems 302, 308 and/or the radio network subsystems 304, 306. Each of the elements illustrated in FIG. 3 are well known in the art and have well defined functionality. Furthermore, for the purposes of the present invention, each of the elements illustrated in FIG. 3 comprise processors and storage devices suitable for implementing software algorithms as known in the art.

As shown, each base station system 302, 308 comprises a base station controller 320 coupled to one or more base transceiver systems 322. As known in the art, the base station controller 320 controls the operation of the base transceiver systems 322 which, in turn, comprise one or more wireless transceivers used to implement a wireless interface in accordance with the present invention. In a similar vein, each radio network subsystem 304, 306 comprises a radio network controller 324 coupled to one or more nodes 326. Each node 326 is essentially a logical representation of the equipment responsible for the wireless transmission and reception within one or more coverage areas. In turn, the radio network controller 324 controls the use and integrity of the wireless resources represented by the corresponding nodes.

The core network 310 preferably comprises a packet switched portion (PS) illustrated on the right and a circuit switched portion (CS) illustrated on the left. As shown in FIG. 3, a base station system 302, 308 may be coupled to either the packet switched portion of the core network 310, or to the circuit switched portion of the core network 310. Conversely, each radio network subsystem 304, 306 may be coupled to both the packet switched and circuit switch portion of the core network 310. As known in the art, the packet switched portion of the core network 310 typically comprises a plurality of support nodes. In particular, as shown in FIG. 3, a serving support node 330 (SGSN) is provided and coupled to a gateway support node (GGSN) 332. The SGSN stores subscription information and location information necessary to implement the packet switched services for each communication unit registered with that SGSN. The GGSN 332 stores subscription information and routing information needed to route packet data traffic received from the IP network 312 and destined for one of the communication units 328. In the circuit switched portion of the core network 310, a mobile switching center 334 performs functions in order to handle the circuit switched services to and from the communication units 328. It should be noted that the present invention does not effect, and is not effected by, the operation of the circuit switched portion of the core network.

In the context of the present invention, the base station systems 302, 308 or the radio network subsystems 304, 306 constitute the radio access network portion of the system 300. Furthermore, the base station controllers 320 and base transceiver systems 322, or the radio network controllers 324 and nodes 326 comprise network elements suitable for implementing the functionality attributed to the radio access network as described above relative to FIG. 2. Also, the SGSN 330 may serve as the wireless agent acting on behalf of the radio access network. As previously described above, using an explicit messaging scheme, an end point such as a communication unit 328 or wireless proxy 336, 318 acting on behalf of the communication unit 328, may send an indication of the communication type directly to the base station system 302, 308 or radio network subsystem 304, 306. Alternatively, a client 314 or call server 316 acting on behalf of the client 314, may send an explicit message to the serving support node 330 on behalf of the appropriate base station system 302, 308 or radio network subsystem 304, 306. As illustrated in FIG. 3, the wireless proxy 336 may be coupled to the SGSN 330 or the IP network 312. In a typical application of a wireless proxy and call server, a communication unit will communicate with the wireless proxy in an effort to establish communications with a given client. The wireless proxy will thereafter communicate with a call server, acting on the client's behalf, to establish the communication. Once the communication has been established by the wireless proxy and call server, the communication unit and the client may assume control of the communication. Regardless of the mechanism used to establish communications between a communication unit and client, an implicit or explicit messaging scheme may be used to inform the RAN, as mentioned previously. An example of an implicit messaging scheme based on modifications to existing protocols is further illustrated with respect to FIGs. 4-8.

Referring now to FIG. 4, a protocol stack in accordance with the prior art is illustrated. The illustrations in FIGs. 4, 5 and 7 are based on the concept of the Open Systems Interconnect (OSI) Model in which each protocol layer uses the layer immediately below it and provides services to the layer immediate above it. The protocol stack shown in FIG. 4 would be exchanged between a codec, typically located within the core network and a radio network controller, and thus forms a part of the so-called Iu Interface. A codec protocol 402 comprising data frames generated by a codec occupies the highest level in the protocol stack. In practice, the codec protocol 402 is passed transparently through the radio network controller and is terminated by a codec within a communication unit. A frame protocol 404 produces data packets according to a frame format and supports communication between the codec within the core network and the radio network controller. Lower protocol layers 406, 408, corresponding to the data link layer and physical layer, respectively, as designated in the OSI model, are provided as known in the art.

On the other side of the packet switched portion of the core network, i.e., from the core network 310 to the IP network 312 via the GGSN 332, a protocol stack like that illustrated in FIG. 5 would be used. As before, a codec protocol 502 occupies the highest level in the protocol stack. In this case, the codec protocol 502 constitutes data frames originated by a codec within a communication unit and terminated by a client residing on the packet switched network. Frames generated by the codec are encapsulated by a real-time protocol (RTP)/user datagram protocol (UDP)/IP encapsulation layer 504. The RTP/UDP/IP encapsulation allows the data to be properly routed when transmitted through the IP network. As in FIG. 4, the lower protocol layers 506, 508 are again provided as necessary.

A typical prior art codec frame format is further illustrated with reference to FIG. 6. In particular, the frame format shown in FIG. 6 is typical of those found in traditional circuit switched systems. For the purposes of the present invention, the frame format in FIG. 6 illustrates the concept of sub-flows corresponding to a given communication. In this case, a user plane protocol header 602 forming a part of the Iu Interface designates which communication a particular set of sub-flows 604-608 belong to, i.e., which communication unit has established this communication. Each sub-flow preferably corresponds to a different level of error susceptibility and, hence, to a different level of required error protection. For example, in an Adaptive Multirate (AMR) codec used for encoding voice, there are three different layers of error protection. The concept of sub-flows is exploited by the present invention as a means of providing an implicit indication of communication type to a radio access network.

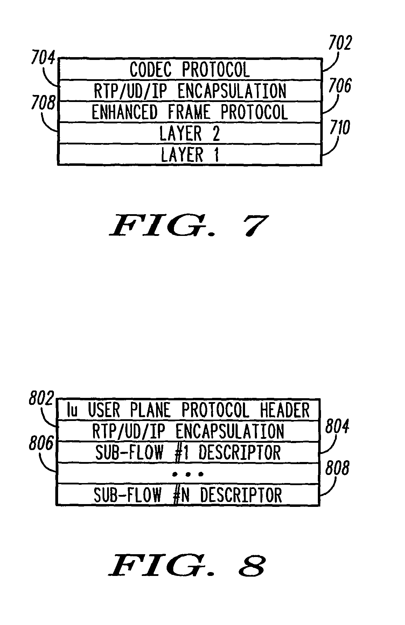

Referring now to FIG. 7, a protocol stack in accordance with the present invention is illustrated. In particular, like the protocol stack illustrated in FIG. 5, the protocol stack of FIG. 7 supports communication between a core network and an IP network. Thus, a codec protocol layer 702 is again encapsulated in RTP/UDP/IP header information by the RTP/UDP/IP layer 704. However, a so-called enhanced frame protocol layer 706 is interposed between the RTP/UDP/IP layer 704 and the lower layers 708, 710. The enhanced frame protocol layer 706, further illustrated in FIG. 8, communicates, on a packet-by-packet basis, information specific to the RTP/UDP/IP encapsulation 802 as an additional sub-flow relative to the frame format. Additionally, sub-flows descriptors 804-808 illustrative of the nature of the data included in each sub-flow forming a part of codec protocol 702 are also included. With this knowledge, the radio access network, upon receiving the enhanced frame protocol layer, can optimize error correction for the data transmitted via the wireless interface. In this manner, the radio access network can be notified of the communication type and thereby optimize the wireless interface. Note that the scheme illustrated in FIGS. 7 and 8, as those having ordinary skill in the art will recognize, is but one of many possible implementations of an implicit messaging scheme in accordance with the present invention, and is provided by way of example rather than limitation.

The present invention provides a technique whereby endpoints of a communication, or other entities on their behalf, inform a radio access network as to the type of communication between the endpoints, thereby allowing the radio access network to optimize a wireless interface. In contrast with prior art systems, this allows greater flexibility as to the types of services that may be offered, while ensuring that each such service will be supported over the wireless interface in an optimal fashion.

In the foregoing specification, the invention has been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential features or elements of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for optimizing a wireless interface between a radio access network (104) and a communication unit (102) when establishing communications between endpoints comprising the communication unit (102) and a client (110) in a wireless communication system (100) comprising the communication unit (102) in wireless communication with the radio access network (104), the radio access network (104) in communication with a packet switched network and the packet switched network in communication with the client (110); the method comprising:
receiving, by the radio access network (104) from a first endpoint of the endpoints, an indication of a codec type for a communication exchanged between the endpoints;
and **characterized by**,
in response to receiving the codec type indication, choosing, by the radio access network (104), at least one of an appropriate level of error correction and a scheme for compressing and decompressing packet headers based on the indicated codec type; and
optimizing, by the radio access network (104), the wireless interface by selectively applying the at least one of an appropriate level of error correction and a scheme for compressing and decompressing packet headers

2. The method of claim 1, further comprising:
determining, by a first endpoint of the endpoints, the codec type for the communication exchanged between the endpoints; and
informing, by the first endpoint, the radio access network (104) of the codec type.

3. A computer-readable medium having stored thereon computer-executable instructions that, when executed by a computer processor, cause said processor to carry out the method of claim 1.

4. An apparatus adapted to function as part of a radio access network (104) in a wireless communication system (100) comprising at least one communication unit (102) in wireless communication with the radio access network (104) via a wireless interface, the radio access network (104) in communication with a packet switched network and the packet switched network in communication with at least one client (110), wherein endpoints comprising a communication unit (102) of the at least one communication unit (102) and a client (110) of the at least one client (110) exchange a communication; the apparatus comprising:
means for receiving, from a first endpoint of the endpoints, an indication of a codec type for the communication exchanged between the endpoints;
and **characterized by**:
means, coupled tn the means for receiving, for choosing, in response to receiving the codec type indication, at least one of an appropriate level or error correction and a scheme for compressing and decompressing packet headers based on the indicated codec type; and
means, coupled to the means for receiving, for optimizing the wireless interface by selectively applying the at least one of an appropriate level of error correction and a scheme for compressing and decompressing packet headers.

## Patentansprüche

1. Ein Verfahren zur Optimierung einer drahtlosen Schnittstelle zwischen einem Funkzugangsnetzwerk (104) und einer Kommunikationseinheit (102) beim Herstellen von Kommunikationen zwischen Endpunkten, umfassend die Kommunikationseinheit (102) und einen Client (110) in einem drahtlosen Kommunikationssystem (100), umfassend die Kommunikationseinheit (102) in drahtloser Kommunikation mit dem Funkzugangsnetzwerk (104), das Funkzugangsnetzwerk (104) in Kommunikation mit einem paketvermittelten Netzwerk und das paketvermittelte Netzwerk in Kommunikation mit dem Client (110); wobei das Verfahren folgendes umfasst:
Empfangen durch das Funkzugangsnetzwerk (104) von einem ersten Endpunkt der Endpunkte einer Angabe einer Codecart für eine zwischen den Endpunkten ausgetauschte Kommunikation;
und **gekennzeichnet ist durch**
als Antwort auf das Empfangen der Codecartangabe, Auswählen **durch** das Funkzugangsnetzwerk (104) von mindestens einem aus einem zweckmäßigen Niveau der Fehlerkorrektur und einem Schema zum Komprimieren und Dekomprimieren von Paketkopfzeilen basierend auf der angegebenen Codecart; und
Optimieren **durch** das Funkzugangsnetzwerk (104) der drahtlosen Schnittstelle **durch** selektives Anwenden von dem mindestens einen aus einem zweckmäßigen Niveau der Fehlerkorrektur und einem Schema zum Komprimieren und Dekomprimieren von Paketkopfzeilen.

2. Das Verfahren nach Anspruch 1, das ferner folgendes umfasst:
Bestimmen durch einen ersten Endpunkt der Endpunkte der Codecart für die zwischen den Endpunkten ausgetauschte Kommunikation; und
Informieren durch den ersten Endpunkt des Funkzugangsnetzwerks (104) über die Codecart.

3. Ein computerlesbares Medium, das darauf gespeichert computerausführbare Anweisungen besitzt, die beim Ausführen durch einen Computerprozessor den Prozessor dazu veranlassen, das Verfahren nach Anspruch 1 auszuführen.

4. Ein Apparat, der angepasst ist, um als Teil eines Funkzugangsnetzwerks (104) in einem drahtlosen Kommunikationssystem (100) zu fungieren, umfassend mindestens eine Kommunikationseinheit (102) in drahtloser Kommunikation mit dem Funkzugangsnetzwerk (104) über eine drahtlose Schnittstelle, das Funkzugangsnetzwerk (104) in Kommunikation mit einem paketvermittelten Netzwerk und das paketvermittelte Netzwerk in Kommunikation mit mindestens einem Client (110), wobei Endpunkte, umfassend eine Kommunikationseinheit (102) der mindestens einen Kommunikationseinheit (102) und einen Client (110) des mindestens einen Clients (110), eine Kommunikation austauschen; wobei der Apparat folgendes umfasst:
Mittel zum Empfangen von einem ersten Endpunkt der Endpunkte einer Angabe einer Codecart für die zwischen den Endpunkten ausgetauschte Kommunikation;
und **gekennzeichnet ist durch**:
Mittel, gekoppelt mit den Mitteln zum Empfangen, zum Auswählen als Antwort auf das Empfangen der Codecartangabe, von mindestens einem aus einem zweckmäßigen Niveau der Fehlerkorrektur und einem Schema zum Komprimieren und Dekomprimieren von Paketkopfzeilen basierend auf der angegebenen Codecart; und
Mittel, gekoppelt mit den Mitteln zum Empfangen, zum Optimieren der drahtlosen Schnittstelle **durch** selektives Anwenden von dem mindestens einen aus einem zweckmäßigen Niveau der Fehlerkorrektur und einem Schema zum Komprimieren und Dekomprimieren von Paketkopfzeilen.

## Revendications

1. Procédé pour l'optimisation d'une interface sans fil entre un réseau d'accès radio (104) et une unité de communication (102) lors de l'établissement de communications entre des points d'extrémité comprenant l'unité de communication (102) et un client (110) dans un système de communication sans fil (100) comprenant l'unité de communication (102) en communication sans fil avec le réseau d'accès radio (104), le réseau d'accès radio (104) étant en communication avec un réseau à commutation par paquets et le réseau à commutation par paquets étant en communication avec le client (110), le procédé comprenant :
- la réception, par le réseau d'accès radio (104) à partir d'un premier point d'extrémité des points d'extrémité, d'une indication d'un type de codec pour une communication échangée entre les points d'extrémité ;
et **caractérisé par**,
- en réponse à la réception de l'indication du type de codec, le choix, par le réseau d'accès radio (104), d'au moins l'un d'un niveau approprié de correction d'erreur et d'un schéma de compression et de décompression d'entêtes de paquet sur la base du type de codec indiqué ; et
- l'optimisation, par le réseau d'accès radio (104), de l'interface sans fil par application sélective du au moins un d'un niveau de correction d'erreur approprié et d'un schéma de compression et de décompression d'entêtes de paquet.

2. Procédé selon la revendication 1, comprenant en outre :
- la détermination, par un premier point d'extrémité des points d'extrémité, du type de codec pour la communication échangée entre les points d'extrémité ; et
- la notification du type de codec au réseau d'accès radio (104) par le premier point d'extrémité.

3. Support lisible par ordinateur ayant, stockées sur celui-ci, des instructions exécutables par ordinateur qui, lorsqu'elles sont exécutées par un processeur d'ordinateur, amènent ledit processeur à mettre en oeuvre le procédé selon la revendication 1.

4. Appareil apte à fonctionner en tant que partie d'un réseau d'accès radio (104) dans un système de communication sans fil (100) comprenant au moins une unité de communication (102) en communication sans fil avec le réseau d'accès radio (104) par l'intermédiaire d'une interface sans fil, le réseau d'accès radio (104) étant en communication avec un réseau à commutation par paquets et le réseau à commutation par paquets étant en communication avec au moins un client (110), des points d'extrémité comprenant une unité de communication (102) de la au moins une unité de communication (102) et un client (110) du au moins un client (110) échangeant une communication, l'appareil comprenant :
- des moyens pour recevoir, à partir d'un premier point d'extrémité des points d'extrémité, une indication d'un type de codec pour la communication échangée entre les points d'extrémité ;
et **caractérisé par** le fait :
- des moyens, couplés aux moyens de réception, pour choisir, en réponse à la réception de l'indication du type de codec, au moins l'un d'un niveau approprié de correction d'erreur et d'un schéma de compression et de décompression d'en-têtes de paquet sur la base du type de codec indiqué ; et
- des moyens, couplés aux moyens de réception, pour optimiser l'interface sans fil par application sélective du au moins un d'un niveau approprié de correction d'erreur et d'un schéma de compression et de décompression d'en-têtes de paquet.
